# FASCICULE DE BREVET EUROPEEN

(11) **EP 3 085 015 B1**
(45) Date de publication et mention de la délivrance du brevet: **18.10.2017**
(21) Numéro de dépôt: 14812463.9
(22) Date de dépôt: 12.12.2014
(51) Int. Cl.: H04L 12/24, H04L 12/751

(54) **PROCÉDÉ DE SUIVI ET DE MAINTIEN DE TOPOLOGIE D'UN RÉSEAU DE COMMUNICATION**
VERFAHREN ZUR VERFOLGUNG UND AUFRECHTERHALTUNG DER TOPOLOGIE EINES KOMMUNIKATIONSNETZES
METHOD OF TRACKING AND MAINTAINING TOPOLOGY OF A COMMUNICATION NETWORK

(30) Priorité: 20.12.2013 FR 1363247
(43) Date de publication de la demande: 26.10.2016
(73) Titulaire: Sagemcom Energy & Telecom SAS, 92500 Rueil-Malmaison (FR)
(72) Inventeur: LALAM, Massinissa, F-92500 Rueil Malmaison (FR)
(74) Mandataire: Le Guen-Maillet
(86) Numéro de dépôt international: PCT/EP2014/077632
(87) Numéro de publication internationale: WO 2015/091290

(56) Documents cités:
- EP-A2- 1 868 299
- WO-A2-2012/162691
- US-A1- 2013 219 045

## Description

La présente invention concerne le suivi et le maintien de topologie d'un réseau de communication sous forme d'arbre de dispositifs noeuds et dans lequel des collisions de messages peuvent survenir.

De nombreux réseaux de communication ont une forme d'arbre pour permettre d'étendre la portée des communications. Les dispositifs d'un tel réseau de communication sont généralement appelés *noeuds.* Un dispositif noeud tient le rôle de racine du réseau de communication et gère le réseau de communication de manière à organiser le partage d'un même support de communication : émission de balises de synchronisation, gestion de topologie,... Des dispositifs noeuds servent alors de relais pour le compte d'autres dispositifs noeuds du réseau de communication lorsque ces derniers n'arrivent pas à recevoir directement des informations du dispositif noeud racine.

On trouve notamment de tels réseaux de communication dans le cadre des réseaux d'alimentation électrique de type AMM (« Automated Meter Management » en anglais), dans lesquels des communications sont établies entre des compteurs électriques, dits intelligents (« smart meters » en anglais), et un dispositif concentrateur de données (« data concentrator » en anglais), parfois appelé *noeud de base* (« base node » en anglais). C'est le cas par exemple dans les spécifications PRIME (« PoweRline Intelligent Metering Evolution » en anglais). Le dispositif concentrateur est alors la racine du réseau de communication. Les échanges entre les compteurs électriques et le dispositif concentrateur de données s'appuient sur des communications par courants porteurs en ligne (« PowerLine Communications » en anglais).

De telles communications par courants porteurs en ligne doivent faire face à des interférences liées à des phénomènes de diaphonie, et/ou à un manque de fiabilité de certains liens de communication dans le réseau de communication par courants porteurs en ligne (*e.g*. limite de portée due à la longueur des câbles), et/ou à des bruits de différentes natures (bruits blancs, bruits colorés, bruits impulsionnels principalement), et/ou à des désadaptations d'impédance. Pour rappel, la diaphonie est un phénomène qui permet aux signaux, typiquement par couplage capacitif, de se propager sans passer par des paires de cuivre proprement dites, mais par des liens parasites non visibles. Ce phénomène est instable, car pouvant varier en fonction de la température ou de l'activité sur le réseau de communication par courants porteurs en ligne. A noter qu'il peut également y avoir de la diaphonie au sein d'un même appareil via des liaisons cuivre sur circuits imprimés et/ou via certains composants qui constituent ledit appareil.

Ces phénomènes peuvent entraîner des pertes de paquets ou messages, notamment de paquets ou messages de signalisation, et entraîner des déconnexions de dispositifs noeuds du réseau de communication.

De plus, du fait du partage du support de communication, des collisions entre paquets ou messages émis par différents dispositifs du réseau de communication peuvent survenir.

Pour maintenir la connectivité et le caractère opérationnel du réseau de communication, le concentrateur de données met en oeuvre, en collaboration avec tous les dispositifs noeuds du réseau de communication, un mécanisme de surveillance qui fonctionne de la façon suivante : le dispositif concentrateur envoie auxdits dispositifs noeuds des requêtes de vérification de présence (appelées « keep-alive » dans les spécifications PRIME) auxquelles doivent répondre lesdits dispositifs noeuds afin de notifier de leur présence dans le réseau de communication ; lorsqu'un dispositif noeud n'a pas reçu de requêtes de vérification de présence avant l'expiration d'une temporisation prédéterminée, ledit dispositif noeud se considère déconnecté du réseau de communication ; et lorsque le concentrateur de données ne reçoit pas de réponse à une ou plusieurs requêtes de vérification de présence, le dispositif concentrateur considère que ledit dispositif noeud est déconnecté du réseau de communication.

Des valeurs courtes de temporisation permettent de suivre finement les évolutions de topologie du réseau de communication, mais ont pour inconvénient d'augmenter considérablement le volume de signalisation, ce qui augmente significativement le risque de collision de paquets ou de messages.

Des valeurs plus longues de temporisation (valeur maximum à 4096 secondes selon les spécifications PRIME) ont l'inconvénient de dégrader la réactivité du réseau de communication aux changements de topologie. Il n'en reste pas moins que le volume de signalisation reste élevé, et croissant avec la quantité de dispositifs dans le réseau de communication, ce qui augmente d'autant le risque de collision de paquets ou de messages.

Il est alors souhaitable de pallier ces inconvénients de l'état de la technique, et notamment de réduire le volume de messages de signalisation échangés pour la gestion de tels réseaux de communication, de manière à réduire le risque de collision de paquets ou de messages.

Il est notamment souhaitable de fournir une solution qui permette, dans de tels réseaux de communication, la coexistence avec des dispositifs compatibles avec le réseau de communication et déjà disponibles sur étagère.

L'invention concerne un procédé de suivi et de maintien de topologie d'un réseau de communication sous forme d'arbre de dispositifs noeuds et dans lequel des collisions de messages peuvent survenir, des dispositifs noeuds pouvant être relais entre un dispositif concentrateur qui est racine de l'arbre et d'autres dispositifs noeuds qui leur sont respectivement rattachés, les dispositifs noeuds qui ne sont pas relais étant des dispositifs noeuds terminaux, les dispositifs noeuds implémentant un mécanisme de surveillance dans lequel le dispositif concentrateur envoie auxdits dispositifs noeuds des requêtes de vérification de présence auxquelles lesdits dispositifs noeuds doivent répondre avant expiration d'une temporisation prédéterminée afin de notifier de leur présence dans le réseau de communication sous peine d'être considérés comme déconnectés du réseau de communication. Le procédé est tel que le mécanisme de surveillance est désactivé pour certains au moins des dispositifs noeuds relais, et est activé pour les autres dispositifs noeuds du réseau de communication, et, lorsqu'au moins tous les dispositifs noeuds terminaux rattachés directement ou indirectement à un dispositif noeud relais sont considérés déconnectés par le mécanisme de surveillance, ledit noeud relais est considéré comme déconnecté du réseau de communication.

Ainsi, la quantité de messages de signalisation est réduite pour suivre et maintenir la connectivité du réseau de communication, ce qui implique une réduction des risques de collision de paquets ou messages et donc augmente la stabilité globale du réseau de communication.

Selon un mode de réalisation particulier, lorsqu'un dispositif noeud relais détecte qu'une quantité de requêtes d'enregistrement non-acquittées en provenance d'au moins un dispositif noeud est supérieure à un seuil prédéfini, ledit dispositif noeud relais considère être déconnecté du réseau de communication.

Selon un mode de réalisation particulier, lorsqu'un dispositif noeud relais détecte qu'un dispositif noeud qui lui est rattaché ne répond pas à une requête de vérification de présence avant expiration de la temporisation prédéterminée, ledit dispositif noeud relais effectue les étapes suivantes : met à jour une table de routage pour refléter une déconnexion dudit dispositif noeud ; détermine, lorsque ledit dispositif noeud était rattaché indirectement audit dispositif noeud relais via un autre dispositif noeud relais, si ledit autre dispositif noeud relais est déconnecté, et si tel est le cas, met à jour la table de routage pour refléter une déconnexion dudit autre dispositif noeud relais et de tout dispositif noeud qui y était rattaché.

Selon un mode de réalisation particulier, lorsqu'un dispositif noeud relais détecte qu'un dispositif noeud qui lui est rattaché ne répond pas à une requête de vérification de présence avant expiration de la temporisation prédéterminée, ledit dispositif noeud relais effectue les étapes suivantes : met à jour une table de routage pour refléter une déconnexion dudit dispositif noeud ; détermine, lorsque ledit dispositif noeud était rattaché indirectement audit dispositif noeud relais via un autre dispositif noeud relais, si ledit autre dispositif noeud relais reste isolé pendant une période de temps supérieure à un seuil prédéfini, et si tel est le cas, met à jour la table de routage pour refléter une déconnexion dudit autre dispositif noeud relais et de tout dispositif noeud qui y était rattaché.

Selon un mode de réalisation particulier, lorsque le dispositif concentrateur détecte qu'un dispositif noeud ne répond pas à une requête de vérification de présence avant expiration de la temporisation prédéterminée, ledit dispositif noeud relais effectue les étapes suivantes : met à jour la topologie dudit réseau de communication ; détermine, lorsque ledit dispositif noeud était rattaché indirectement audit dispositif concentrateur via un dispositif noeud relais, si ledit dispositif noeud relais est déconnecté, et si tel est le cas, met à jour la topologie dudit réseau de communication pour refléter une déconnexion dudit autre dispositif noeud relais et de tout dispositif noeud qui y était rattaché.

Selon un mode de réalisation particulier, lorsque le dispositif concentrateur détecte qu'un dispositif noeud ne répond pas à une requête de vérification de présence avant expiration de la temporisation prédéterminée, ledit dispositif noeud relais effectue les étapes suivantes : met à jour la topologie dudit réseau de communication ; détermine, lorsque ledit dispositif noeud était rattaché indirectement audit dispositif concentrateur via un dispositif noeud relais, si ledit autre dispositif noeud relais est isolé et inactif pendant une période de temps supérieure à un seuil prédéfini, et si tel est le cas, met à jour la table de routage pour refléter une déconnexion dudit autre dispositif noeud relais et de tout dispositif noeud qui y était rattaché.

Selon un mode de réalisation particulier, lorsqu'un dispositif noeud envoie une requête d'enregistrement dans le réseau de communication, ledit dispositif noeud indique dans ladite requête si ledit dispositif noeud admet de désactiver le mécanisme de surveillance.

Selon un mode de réalisation particulier, le dispositif concentrateur effectue les étapes suivantes : obtient de chaque requête d'enregistrement une information indiquant si ledit dispositif noeud admet ou pas de désactiver le mécanisme de surveillance ; détermine des chemins entre chaque dispositif noeud relais et ledit dispositif concentrateur ; et envoie, uniquement à chaque dispositif noeud relais dont le chemin vers le dispositif concentrateur ne comporte pas de dispositif noeud relais n'admettant pas la désactivation du mécanisme de surveillance, un message indiquant de désactiver le mécanisme de surveillance.

Selon un mode de réalisation particulier, le réseau de communication est à courants porteurs en ligne et les dispositifs noeuds sont des compteurs électriques.

Selon un mode de réalisation particulier, le réseau de communication est de type PRIME, le dispositif concentrateur acceptant la désactivation du mécanisme de surveillance.

L'invention concerne également un système de suivi et de maintien de topologie d'un réseau de communication sous forme d'arbre de dispositifs noeuds et dans lequel des collisions de messages peuvent survenir, des dispositifs noeuds pouvant être relais entre un dispositif concentrateur qui est racine de l'arbre et d'autres dispositifs noeuds qui leur sont respectivement rattachés, les dispositifs noeuds qui ne sont pas relais étant des dispositifs noeuds terminaux, les dispositifs noeuds implémentant un mécanisme de surveillance dans lequel le dispositif concentrateur envoie auxdits dispositifs noeuds des requêtes de vérification de présence auxquelles lesdits dispositifs noeuds doivent répondre avant expiration d'une temporisation prédéterminée afin de notifier de leur présence dans le réseau de communication sous peine d'être considérés comme déconnectés du réseau de communication. Ledit système est tel que le mécanisme de surveillance est désactivé pour certains au moins des dispositifs noeuds relais, et est activé pour les autres dispositifs noeuds du réseau de communication, et, lorsqu'au moins tous les dispositifs noeuds terminaux rattachés directement ou indirectement à un dispositif noeud relais sont considérés déconnectés par le mécanisme de surveillance, ledit noeud relais est considéré comme déconnecté du réseau de communication.

L'invention concerne également un dispositif concentrateur d'un réseau de communication sous forme d'arbre de dispositifs noeuds et dans lequel des collisions de messages peuvent survenir, des dispositifs noeuds pouvant être relais entre le dispositif concentrateur qui est racine de l'arbre et d'autres dispositifs noeuds qui leur sont respectivement rattachés, les dispositifs noeuds qui ne sont pas relais étant des dispositifs noeuds terminaux, les dispositifs noeuds implémentant un mécanisme de surveillance dans lequel le dispositif concentrateur envoie auxdits dispositifs noeuds des requêtes de vérification de présence auxquelles lesdits dispositifs noeuds doivent répondre avant expiration d'une temporisation prédéterminée afin de notifier de leur présence dans le réseau de communication sous peine d'être considérés comme déconnectés du réseau de communication. Le dispositif concentrateur est adapté pour désactiver le mécanisme de surveillance pour certains au moins des dispositifs noeuds relais, et activer le mécanisme de surveillance pour les autres dispositifs noeuds du réseau de communication, et, le dispositif concentrateur est adapté pour considérer un dispositif noeud relais comme déconnecté du réseau de communication, lorsqu'au moins tous les dispositifs noeuds terminaux rattachés directement ou indirectement audit dispositif noeud relais sont considérés déconnectés par le mécanisme de surveillance.

L'invention concerne également un procédé de suivi et de maintien de topologie d'un réseau de communication sous forme d'arbre de dispositifs noeuds et dans lequel des collisions de messages peuvent survenir, des dispositifs noeuds pouvant être relais entre un dispositif concentrateur qui est racine de l'arbre et d'autres dispositifs noeuds qui leur sont respectivement rattachés, les dispositifs noeuds qui ne sont pas relais étant des dispositifs noeuds terminaux, les dispositifs noeuds implémentant un mécanisme de surveillance dans lequel le dispositif concentrateur envoie auxdits dispositifs noeuds des requêtes de vérification de présence auxquelles lesdits dispositifs noeuds doivent répondre avant expiration d'une temporisation prédéterminée afin de notifier de leur présence dans le réseau de communication sous peine d'être considérés comme déconnectés du réseau de communication. Le procédé est tel que le dispositif concentrateur désactive le mécanisme de surveillance pour certains au moins des dispositifs noeuds relais, et active le mécanisme de surveillance pour les autres dispositifs noeuds du réseau de communication, et tel que le dispositif concentrateur considère un dispositif noeud relais comme déconnecté du réseau de communication, lorsqu'au moins tous les dispositifs noeuds terminaux rattachés directement ou indirectement audit dispositif noeud relais sont considérés déconnectés par le mécanisme de surveillance.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus, lorsque ledit programme est exécuté par le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1A illustre schématiquement un réseau de communication déployé sur un réseau d'alimentation électrique et dans lequel l'invention peut être mise en oeuvre ;
- la Fig. 1B illustre schématiquement un format de trame émise dans le réseau de communication ;
- la Fig. 2 illustre schématiquement un exemple d'architecture matérielle d'un dispositif noeud du réseau de communication ;
- la Fig. 3 illustre schématiquement un algorithme, mis en oeuvre par un dispositif concentrateur du système de communication, de configuration du réseau de communication suite à un changement de topologie ;
- la Fig. 4 illustre schématiquement un algorithme d'enregistrement d'un noeud dans le réseau de communication ;
- la Fig. 5 illustre schématiquement un format de contenu de requête d'enregistrement d'un noeud dans le réseau de communication ;
- la Fig. 6 illustre schématiquement un algorithme, mis en oeuvre par le dispositif concentrateur, de configuration d'un dispositif noeud relais dans le réseau de communication, selon un mode de réalisation particulier ;
- la Fig. 7 illustre schématiquement un algorithme de configuration par un dispositif noeud relais, selon le mode de réalisation particulier de la Fig. 6 ;
- la Fig. 8 illustre schématiquement un algorithme de traitement de requêtes d'enregistrement dans le réseau de communication ;
- la Fig. 9 illustre schématiquement un algorithme, mis en oeuvre par un dispositif noeud relais, de traitement de requêtes de vérification de présence d'un dispositif noeud rattaché au dispositif noeud relais ; et
- la Fig. 10 illustre schématiquement un algorithme, mis en oeuvre par le dispositif concentrateur, de vérification de présence de dispositifs noeuds dans le réseau de communication.

La description qui suit détaille la présente invention dans le cadre d'un réseau de communication en arbre déployé sur un réseau d'alimentation électrique, afin de mettre en oeuvre des services de type AMM. Il convient toutefois de noter que la présente invention s'applique à tout réseau de communication en arbre dans lequel des collisions de paquets ou de messages peuvent survenir et dans lequel, pour suivre et maintenir la connectivité, les dispositifs noeuds implémentent un mécanisme de surveillance dans lequel le dispositif concentrateur envoie auxdits dispositifs noeuds des requêtes de vérification de présence auxquelles lesdits dispositifs noeuds doivent répondre avant expiration d'une temporisation prédéterminée afin de notifier de leur présence dans le réseau de communication sous peine d'être considérés comme déconnectés du réseau de communication.

Afin de limiter les collisions de paquets ou de messages dans de tels réseaux de communication, il est proposé que le mécanisme de surveillance soit désactivé pour certains au moins des dispositifs noeuds relais, et soit activé pour les autres dispositifs noeuds du réseau de communication. Il est en outre proposé que, lorsqu'au moins tous les dispositifs noeuds terminaux rattachés directement ou indirectement à un dispositif noeud relais sont considérés déconnectés par le mécanisme de surveillance, ledit noeud relais est considéré comme déconnecté du réseau de communication.

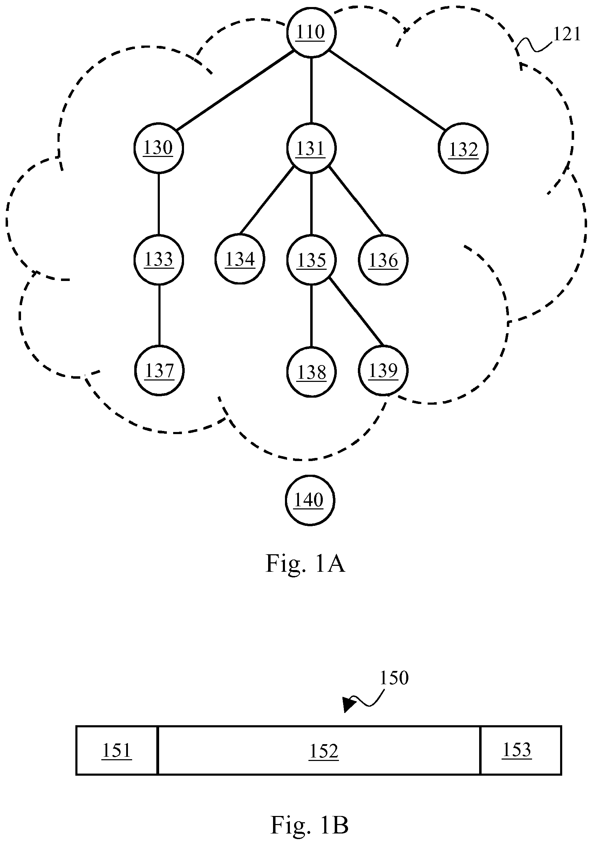

La Fig. 1A illustre schématiquement un réseau de communication 121 déployé sur un réseau d'alimentation électrique et dans lequel l'invention peut être mise en oeuvre.

Le réseau de communication 121 est en forme d'arbre dont un dispositif noeud particulier 110, appelé *dispositif concentrateur*, est la racine. Le réseau de communication 121 est destiné à permettre de connecter une pluralité de dispositifs noeuds au dispositif concentrateur 110. Dans le cadre de la Fig. 1A, les dispositifs noeuds que le réseau de communication 121 vise à connecter sont des compteurs électriques. Le réseau de communication 121 permet ainsi d'établir des communications à courants porteurs en ligne. Etant donnée la portée des communications à courants porteurs en ligne, des dispositifs noeuds jouent le rôle de relais entre des dispositifs noeuds terminaux (qui ne jouent pas le rôle de relais) avec le dispositif concentrateur 110. Un tel dispositif noeud relais est appelé *commutateur* (« switch » en anglais) dans les spécifications PRIME. Certaines communications entre des dispositifs noeuds terminaux et le dispositif concentrateur 110 peuvent nécessiter plusieurs relais successifs. Cela définit donc des rattachements de dispositifs noeuds les uns aux autres pour former l'arbre constituant le réseau de communication 121. Un dispositif noeud qui n'est pas rattaché au réseau de communication 121 est un dispositif déconnecté (« disconnected » en anglais).

Cette situation est présentée sur la Fig. 1A. Un dispositif noeud terminal 132 est directement rattaché au dispositif concentrateur 110. Deux autres dispositifs noeuds 130 et 131 sont aussi directement rattachés au dispositif concentrateur 110. Ces deux dispositifs noeuds 130 et 131 jouent le rôle de relais entre le dispositif concentrateur 110 et d'autres dispositifs noeuds. Le dispositif noeud 130 joue le rôle de relais entre le dispositif concentrateur 110 et un dispositif noeud 133 qui, lui-même, joue le rôle de relais entre le dispositif noeud 130 et un dispositif noeud terminal 137. Les communications entre le dispositif concentrateur 110 et le dispositif noeud terminal 137 passent donc par deux relais successifs, à savoir les dispositifs noeuds relais 130 et 133. Le dispositif noeud 131 joue le rôle de relais entre le dispositif concentrateur 110 et trois autres dispositifs noeuds 134, 135 et 136. Les dispositifs noeuds 134 et 136 sont des dispositifs noeuds terminaux, et le dispositif noeud 135 joue le rôle de relais entre le dispositif noeud 131 et deux dispositifs noeuds terminaux 138 et 139.

La Fig. 1A montre aussi un dispositif noeud 140, qui est un dispositif déconnecté.

Il faut comprendre que la topologie du réseau de communication 121 n'est pas figée. La Fig. 1A représente la topologie du réseau de communication 121 à un instant donné. A cause notamment des phénomènes de diaphonie et autres interférences, des dispositifs noeuds peuvent se trouver déconnectés du réseau de communication 121 et cherchent alors à se réenregistrer au sein du réseau de communication 121. La topologie du réseau de communication 121 à ce moment-là est alors probablement différente de la topologie du réseau de communication 121 avant déconnexion desdits dispositifs noeuds.

Les communications par courants porteurs en ligne partagent un même support de communication (« communication médium » en anglais), ce qui mène à une structure de trame partagée, telle que schématiquement illustrée par la Fig. 1B.

Sur la Fig. 1B, une trame 150 est présentée. Une première partie 151 de la trame 150 est dédiée à l'émission périodique de balises (« beacons » en anglais). Ces balises contiennent des informations servant, entre autre, à la découverte et à la synchronisation du réseau de communication 121. Plusieurs intervalles de temps (« time slots » en anglais) sont définis dans la première partie 151. Un premier intervalle de temps est dédié à l'émission de balises par le dispositif concentrateur 110. Les autres intervalles de temps sont dédiés à l'émission périodique de balises par les dispositifs noeuds relais du réseau de communication 121, afin de permettre aux dispositifs noeuds rattachés auxdits dispositifs noeuds relais de se synchroniser avec le réseau de communication 121. Le dispositif concentrateur 110 est en charge d'attribuer un intervalle de temps et une fréquence d'émission de la première partie 151 de la trame 150 à chaque dispositif noeud relais.

Une seconde partie 152 de la trame 150 est dédiée aux communications par tous les dispositifs noeuds du réseau de communication. Un mécanisme de type CSMA/CA (« Carrier Sense Multiple Access / Collision Avoidance » en anglais) est mis en oeuvre, sans option RTS/CTS (« Request-To-Send / Clear-To-Send » en anglais). Lorsqu'un dispositif noeud doit envoyer un paquet ou un message, ledit dispositif noeud détecte l'état d'occupation du support de communication (*i.e.* canal de transmission) et décide ou non d'envoyer le paquet ou le message en conséquence. Un délai aléatoire à appliquer indépendamment, depuis le début de la seconde partie 152, par chaque dispositif noeud désireux d'émettre permet de limiter, mais pas d'éviter, le risque de collision.

Une troisième partie 153 de la trame 150 est dédiée aux communications par des dispositifs noeuds spécifiques du réseau de communication. On retrouve une telle troisième partie de trame dans les spécifications PRIME, sous l'acronyme CFP (« Contention-Free Period » en anglais). Cet aspect ne sera pas plus détaillé ici, la partie de la trame 150 plus particulièrement concernée par la présente invention étant la seconde partie 152.

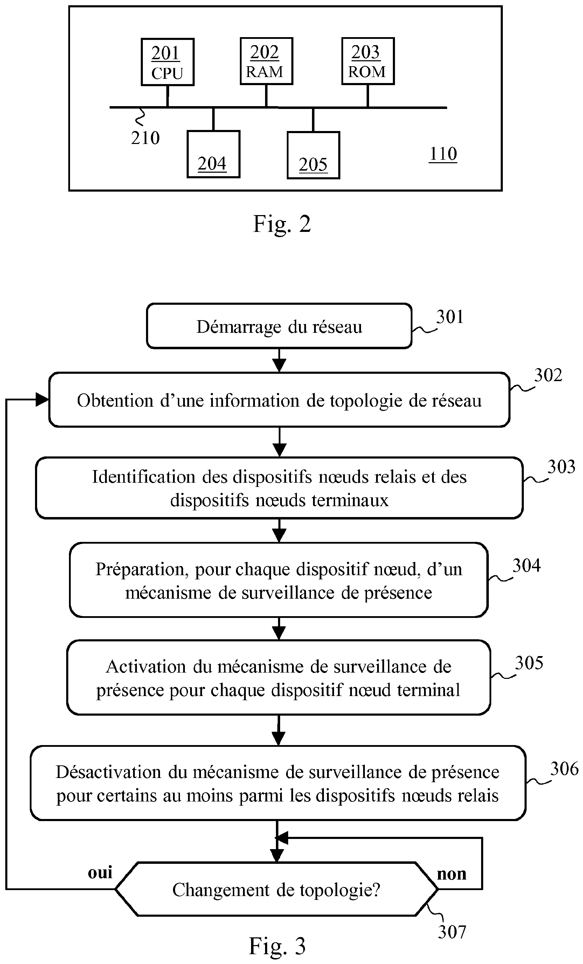

La Fig. 2 illustre schématiquement un exemple d'architecture matérielle d'un dispositif noeud du réseau de communication de la Fig. 1A, que ce soit le dispositif concentrateur 110, un dispositif noeud relais ou un dispositif noeud terminal.

Considérons que la Fig. 2 représente schématiquement l'architecture du dispositif concentrateur 110. Le dispositif concentrateur 110 comprend alors, reliés par un bus de communication 210 : un processeur ou CPU (« Central Processing Unit» en anglais) 201 ; une mémoire vive RAM (« Random Access Memory » en anglais) 202 ; une mémoire morte ROM (« Read Only Memory » en anglais) 203 ; une unité de stockage ou un lecteur de support de stockage, tel qu'un lecteur de cartes SD (« Secure Digital » en anglais) 204 ; une interface 205 permettant au dispositif concentrateur 110 d'établir et de gérer le réseau de communication 121, et ainsi de communiquer avec les dispositifs noeuds du réseau de communication.

Le processeur 201 est capable d'exécuter des instructions chargées dans la RAM 202 à partir de la ROM 203, d'une mémoire externe (non représentée), d'un support de stockage (tel qu'une carte SD), ou d'un réseau de communication. Lorsque le dispositif concentrateur 110 est mis sous tension, le processeur 201 est capable de lire de la RAM 202 des instructions et de les exécuter. Ces instructions forment un programme d'ordinateur causant la mise en oeuvre, par le processeur 201, de tout ou partie des algorithmes et étapes décrits ci-après.

Tout ou partie des algorithmes et étapes décrits ci-après peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

La Fig. 3 illustre schématiquement un algorithme, mis en oeuvre par le dispositif concentrateur 110, de configuration du réseau de communication 121 suite à un changement de topologie.

Dans une étape 301, le dispositif concentrateur 110 effectue un démarrage du réseau de communication 121. Le dispositif concentrateur 110 transmet alors des balises permettant à des dispositifs noeuds de détecter la présence du réseau de communication 121, de se synchroniser avec le réseau de communication 121 et de transmettre des requêtes d'enregistrement desdits dispositifs noeuds dans le réseau de communication 121.

Dans une étape 302 suivante, le dispositif concentrateur 110 obtient une information de topologie du réseau. Typiquement, suite au démarrage du réseau, au moins un dispositif noeud a transmis une requête d'enregistrement au dispositif concentrateur 110. En considérant que le dispositif concentrateur 110 a accepté l'enregistrement, la topologie du réseau de communication 121 a changé.

Dans une étape 303 suivante, le dispositif concentrateur 110 identifie, grâce à l'information de topologie obtenue à l'étape 302, quels dispositifs noeuds du réseau de communication 121 sont des dispositifs noeuds relais et quels dispositifs noeuds du réseau de communication 121 sont des dispositifs noeuds terminaux.

Dans une étape 304 suivante, le dispositif concentrateur 110 prépare, pour chaque dispositif noeud du réseau de communication 121, un mécanisme de surveillance. Ce mécanisme de surveillance permet au dispositif concentrateur 110 de déterminer si tel ou tel dispositif noeud est toujours présent dans le réseau de communication 121. Ce mécanisme de surveillance est comme déjà décrit en partie introductive de la présente description, et fonctionne de façon plus détaillée comme suit :
- lorsqu'un dispositif noeud se voit confirmer sa demande d'enregistrement dans le réseau de communication par le dispositif concentrateur 110, ou bien lorsque le dispositif noeud se voit attribuer le rôle de relais par le dispositif concentrateur 110, ou bien lorsque le dispositif noeud reçoit une requête de vérification de présence (rappel : appelée « keep-alive » dans les spécifications PRIME), le dispositif concentrateur 110 fournit au dispositif noeud une valeur de temporisation (« timer » en anglais) ; puis
- le dispositif noeud active une temporisation de durée égale à la valeur de temporisation fournie par le dispositif concentrateur 110 ; puis
- lorsque la temporisation expire sans que le dispositif noeud n'ait reçu de requête de vérification de présence en provenance du dispositif concentrateur 110, le dispositif noeud se considère comme déconnecté du réseau de communication 121 ; et
- lorsque le dispositif noeud reçoit une telle requête de vérification de présence en provenance du dispositif concentrateur 110 avant expiration de la temporisation, le dispositif noeud répond au dispositif concentrateur 110 pour confirmer la présence dudit dispositif noeud dans le réseau de communication 121 et réinitialise la temporisation avec la valeur fournie dans ladite requête de vérification de présence.

La valeur de temporisation est préférentiellement rappelée par le dispositif concentrateur 110 dans chaque requête de vérification de présence et dans chaque requête de changement de rôle, comme c'est le cas dans les spécifications PRIME.

Ainsi, le dispositif concentrateur 110 est capable de déterminer si tel ou tel noeud, que ledit dispositif concentrateur 110 considère comme connecté au réseau de communication 121, y est effectivement connecté ou pas.

Il convient de noter que tout dispositif noeud s'enregistrant, ou se réenregistrant, dans le réseau de communication 121 est un dispositif noeud terminal. Seulement par la suite ce dispositif noeud terminal peut devenir dispositif noeud relais.

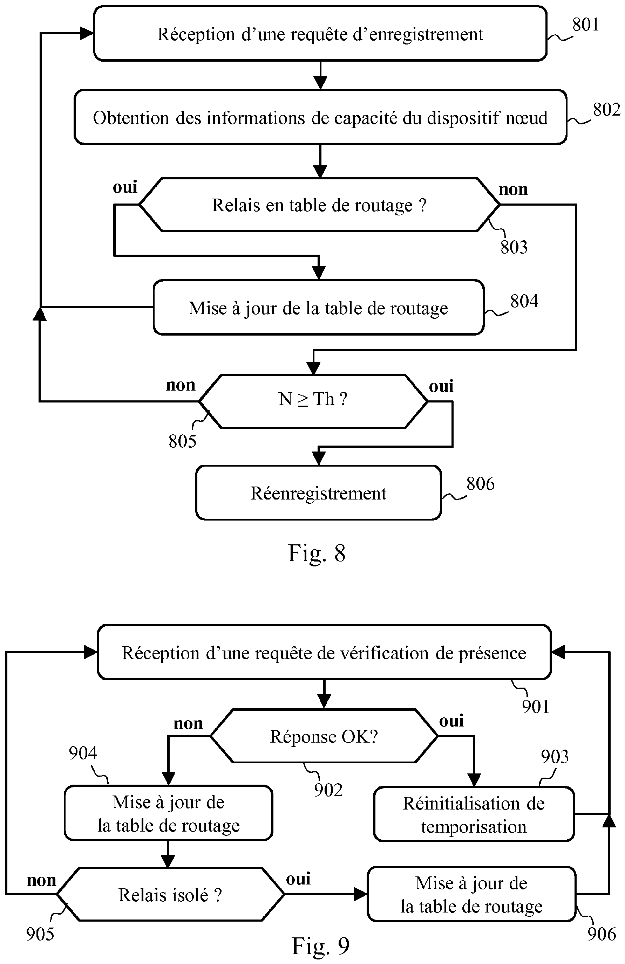

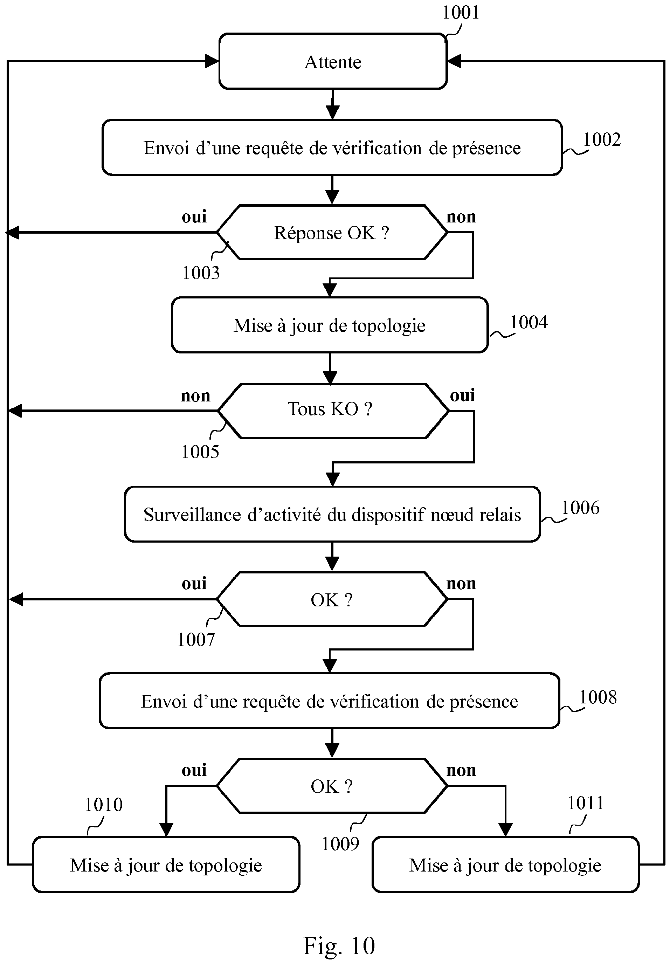

Lorsque la mise en oeuvre du mécanisme de surveillance confirme au dispositif concentrateur 110 que tel ou tel dispositif noeud terminal est toujours présent dans le réseau de communication 121, cela signifie que tout dispositif noeud relais qui était identifié sur le chemin entre le dispositif concentrateur 110 et ledit dispositif noeud terminal est aussi toujours présent dans le réseau de communication 121. Il est alors possible de se passer de ce mécanisme de surveillance pour ces dispositifs noeuds relais. Cela signifie que le dispositif concentrateur s'appuie sur des vérifications de présence de dispositifs noeuds terminaux pour déterminer la présence de dispositifs noeuds relais. Cet aspect est détaillé par la suite en relation avec la Fig. 10. Ces dispositifs noeuds relais doivent alors mettre en place un premier mécanisme complémentaire pour détecter leur éventuelle déconnexion du réseau de communication 121. Cet aspect est détaillé par la suite en relation avec la Fig. 8. Ces dispositifs noeuds relais peuvent également mettre en place un second mécanisme complémentaire pour permettre une mise à jour adéquate de tables de routage. Cet aspect est détaillé par la suite en relation avec la Fig. 9.

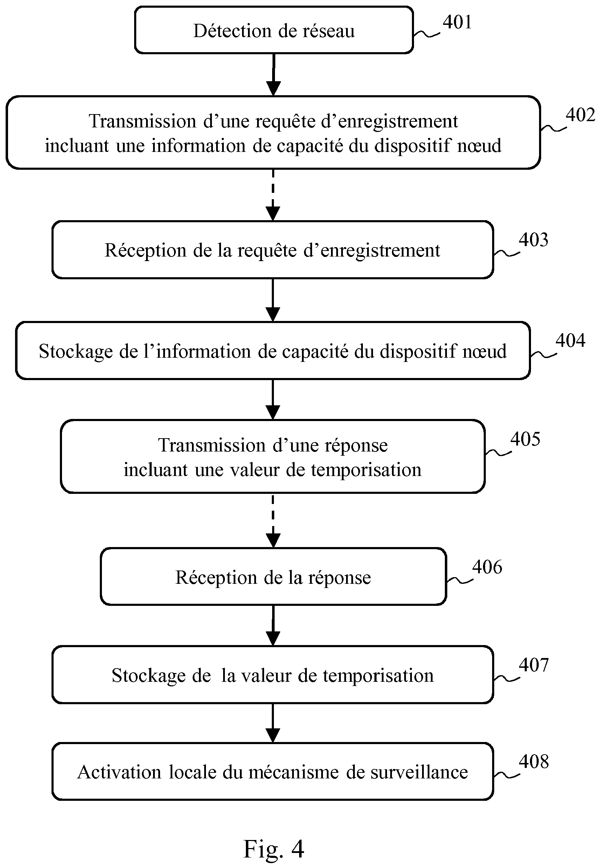

De nombreux réseaux de communication étant aujourd'hui déjà déployés, il est souhaitable de pouvoir faire fonctionner correctement le réseau de communication 121 dans le cas où ledit réseau de communication 121 comporte des dispositifs noeuds relais acceptant la désactivation du mécanisme de surveillance ainsi que des dispositifs noeuds relais n'acceptant pas la désactivation du mécanisme de surveillance. Cet aspect est détaillé par la suite en relation avec les Figs. 4, 5, 6 et 7.

Dans une étape 305 suivante, le dispositif concentrateur 110 active le mécanisme de surveillance pour chaque dispositif noeud terminal. En d'autres termes, le dispositif concentrateur 110 assure d'envoyer une requête de vérification de présence à chaque dispositif noeud terminal, avant l'expiration de la temporisation activée par ledit dispositif noeud terminal dans le cadre du mécanisme de surveillance.

Dans une étape 306 suivante, le dispositif concentrateur 110 assure que le mécanisme de surveillance soit désactivé pour au moins certains dispositifs noeuds relais. Si tous les dispositifs relais du réseau de communication 121 acceptent la désactivation du mécanisme de surveillance, alors le mécanisme de surveillance est désactivé pour tous les dispositifs relais. Si certains dispositifs noeuds n'acceptent pas la désactivation du mécanisme de surveillance, alors le mécanisme de surveillance est désactivé pour tous les dispositifs relais qui acceptent une telle désactivation du mécanisme de surveillance, tant qu'aucun dispositif relais n'acceptant pas la désactivation du mécanisme de surveillance ne se trouve, dans l'arbre, entre le dispositif concentrateur 110 et lesdits dispositifs relais.

Typiquement, le dispositif concentrateur 110 désactive, pour les dispositifs noeuds relais concernés, une temporisation normalement associée à chaque dispositif noeud. Cette opération est préférentiellement synchronisée avec un envoi au dispositif noeud relais concerné d'une confirmation de promotion PRO_REQ_B, ou d'une configuration d'émission de balises BSI_IND, ou d'une confirmation d'enregistrement REG_RSP d'un dispositif noeud rattaché directement audit dispositif noeud relais, selon sur quel événement le dispositif noeud relais va désactiver localement le mécanisme de surveillance.

Dans une étape 306 suivante, le dispositif concentrateur 110 vérifie si un nouveau changement de topologie du réseau de communication 121 est survenu. Si tel est le cas, l'étape 302 est réitérée ; sinon, tant qu'aucun changement de topologie du réseau de communication 121 ne survient, le dispositif concentrateur 110 boucle dans l'étape 307.

La Fig. 4 illustre schématiquement un algorithme d'enregistrement d'un dispositif noeud dans le réseau de communication 121. Considérons que le dispositif noeud 132 est celui qui cherche à se (ré)enregistrer dans le réseau de communication 121 après avoir été déconnecté.

Dans une étape 401, le dispositif noeud 132 détecte la présence du réseau, grâce aux balises émises par le dispositif concentrateur 110 et/ou aux balises émises par un ou plusieurs dispositifs noeuds relais.

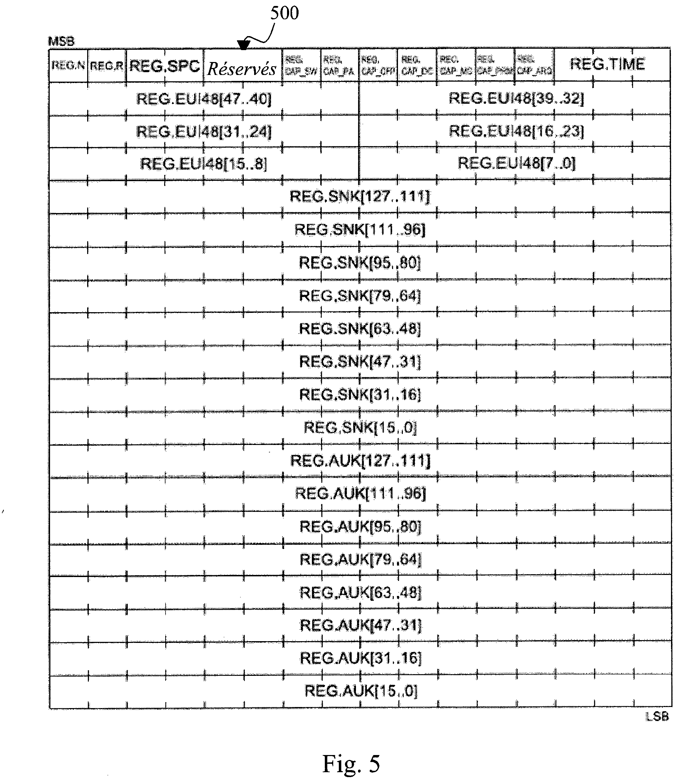

Dans une étape 402 suivante, le dispositif noeud 132 transmet à destination du dispositif concentrateur 110 une requête d'enregistrement dans le réseau de communication 121. Lorsque le dispositif noeud 132 admet la désactivation du mécanisme de surveillance, le dispositif noeud 132 indique cette capacité dans la requête d'enregistrement. Par exemple, selon les spécifications PRIME, la requête d'enregistrement REG_REQ prend, en partie, la forme présentée sur la Fig. 5. Il est possible d'utiliser un des deux bits 500 du premier mot de code qui sont indiqués comme « réservés », c'est-à-dire réservés pour un usage futur, pour fournir une information de capacité. Ainsi, si ce bit vaut « 0 », alors le dispositif noeud concerné n'admet pas la désactivation du mécanisme de surveillance ; et si ce bit vaut « 1 », le dispositif noeud concerné admet la désactivation du mécanisme de surveillance. Il est convenu dans les standards de communication que des champs ou bits réservés (pour un usage futur) doivent être mis à « 0 » par des dispositifs implémentant lesdits standards de communication.

Il est par ailleurs possible au dispositif concentrateur d'utiliser de la même manière la confirmation d'enregistrement REG_RSP pour indiquer au dispositif noeud se connectant au réseau de communication que ledit dispositif noeud peut ultérieurement, lorsque ledit dispositif noeud joue le rôle de dispositif noeud relais, désactiver localement le mécanisme de surveillance.

Dans une étape 403 suivante, le dispositif concentrateur 110 reçoit la requête d'enregistrement transmise par le dispositif noeud 132 à l'étape 402.

Dans une étape 404 suivante, le dispositif concentrateur 110 stocke l'information de capacité incluse dans la requête d'enregistrement reçue, en association avec un identifiant du dispositif noeud 132 (un tel identifiant est typiquement contenu dans la requête d'enregistrement reçue). Comme déjà mentionné, un dispositif noeud s'enregistrant ou se réenregistrant dans le réseau de communication 121 est par défaut un dispositif noeud terminal. Cette information de capacité est alors utile au dispositif concentrateur lorsque des modifications de topologie du réseau de communication 121 surviennent et entraînent une reconfiguration du dispositif noeud 132 en dispositif noeud relais.

Dans une étape 405 suivante, le dispositif concentrateur 110 transmet au dispositif noeud 132 une réponse à la requête d'enregistrement reçue à l'étape 403. Considérons que la réponse à la requête d'enregistrement est positive. La réponse à la requête d'enregistrement inclut alors une valeur de temporisation. Cette valeur de temporisation est celle à appliquer par le dispositif noeud 132 dans le cadre du mécanisme de surveillance.

Dans une étape 406 suivante, le dispositif noeud 132 reçoit la réponse transmise par le dispositif concentrateur 110 à l'étape 405.

Dans une étape 407 suivante, le dispositif concentrateur 110 stocke la valeur de temporisation incluse dans la réponse reçue à l'étape 406, afin de pouvoir mettre en oeuvre le mécanisme de surveillance.

Dans une étape 408 suivante, étant donné que le dispositif noeud 132 est un dispositif noeud terminal, le dispositif noeud 132 active localement le mécanisme de surveillance. En d'autres termes, le dispositif noeud 132 active une temporisation de durée égale à la valeur de temporisation stockée à l'étape 407 et se considère déconnecté du réseau de communication 121 si le dispositif noeud 132 ne reçoit pas de requête de vérification de présence de la part du dispositif concentrateur 110 avant l'expiration de la temporisation. Si le dispositif noeud 132 venait ultérieurement à jouer le rôle de dispositif noeud relais, alors le dispositif noeud 132 serait en mesure de désactiver localement le mécanisme de surveillance.

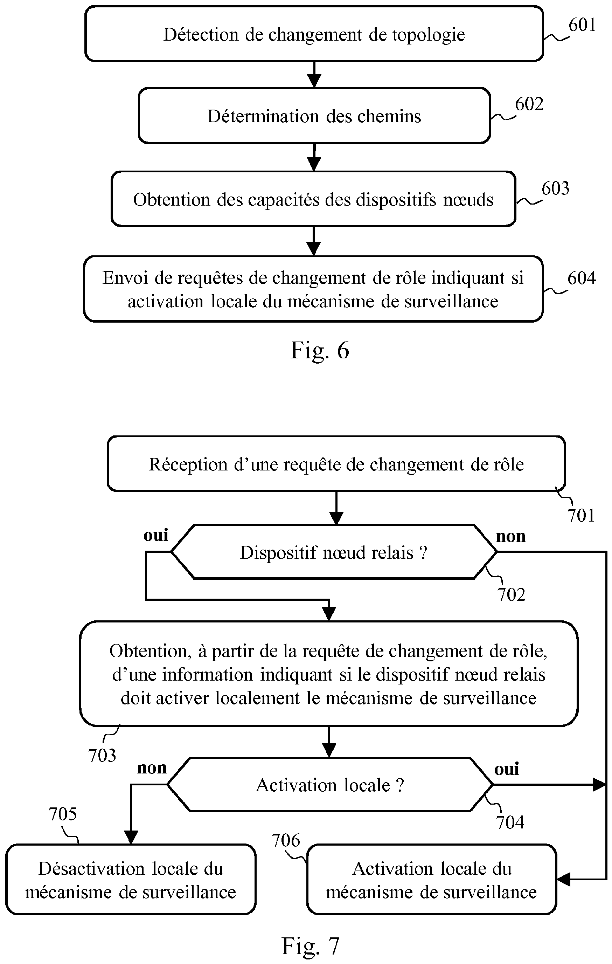

La Fig. 6 illustre schématiquement un algorithme, mis en oeuvre par le dispositif concentrateur 110, de configuration des dispositifs noeuds relais dans le réseau de communication 121, selon un mode de réalisation particulier.

Dans une étape 601, le dispositif concentrateur 110 détecte un changement de topologie du réseau de communication 121. Un dispositif noeud peut souhaiter rejoindre le réseau de communication 121 par le biais d'un dispositif noeud terminal déjà enregistré dans ledit réseau de communication 121. Par exemple, le dispositif terminal 139 peut demander au dispositif concentrateur 110 de changer de rôle afin de permettre au dispositif déconnecté 140 de pouvoir détecter le réseau de communication 121. Un dispositif noeud peut avoir été ajouté au réseau de communication 121 suite au traitement d'une requête d'enregistrement transmise par ledit dispositif noeud, tel que déjà décrit en relation avec la Fig. 4. Un ou plusieurs dispositifs noeuds peuvent avoir été déconnectés du réseau de communication 121. Il convient de noter que, lorsqu'un dispositif noeud relais est déconnecté du réseau de communication 121, tous les dispositifs noeuds qui lui sont directement ou indirectement rattachés sont aussi déconnectés. Par exemple, en considérant le réseau de communication 121 tel que représenté sur la Fig. 1A, si le dispositif noeud relais 131 se trouve déconnecté du réseau de communication 121, alors les dispositifs noeuds 134, 135, 136, qui sont directement rattachés au dispositif noeud relais 131, et les dispositifs noeuds 138 et 139, qui sont indirectement rattachés au dispositif noeud relais 131 (via le dispositif noeud relais 135), se trouvent aussi déconnectés du réseau de communication 121.

Dans une étape 602 suivante, le dispositif concentrateur 110 détermine les chemins qui, dans le réseau de communication 121, permettent d'établir des communications entre chaque dispositif noeud et le dispositif concentrateur 110. Cela permet d'identifier, pour chaque dispositif noeud du réseau de communication 121, quels sont les dispositifs noeuds relais présents entre ledit dispositif noeud et le dispositif concentrateur 110.

Dans une étape 603 suivante, le dispositif concentrateur 110 obtient des informations représentatives des capacités de chacun des dispositifs noeuds relais du réseau de communication 121. En d'autres termes, le dispositif concentrateur 110 obtient une information indiquant, pour chaque dispositif noeud relais, si ledit dispositif noeud relais admet ou pas la désactivation du mécanisme de surveillance. Pour rappel, le dispositif concentrateur 110 a stocké cette information, pour chaque dispositif noeud, au moment de l'enregistrement dudit dispositif noeud dans le réseau de communication 121, tel que déjà décrit en relation avec la Fig. 4.

Dans une étape 604 suivante, le dispositif concentrateur 110 envoie, à chaque dispositif noeud déjà enregistré dans le réseau de communication 121 et devant changer de rôle pour prendre en compte le changement de topologie détecté à l'étape 601, une requête de changement de rôle. La requête peut indiquer audit dispositif noeud de devenir dispositif noeud terminal alors que ledit dispositif noeud était préalablement dispositif noeud relais. Cette reconfiguration du dispositif noeud s'appelle *rétrogradation* (« demotion » en anglais) dans la terminologie PRIME. La requête peut au contraire indiquer audit dispositif noeud de devenir dispositif noeud relais alors que ledit dispositif noeud était préalablement dispositif noeud terminal. Cette reconfiguration du dispositif noeud s'appelle *promotion* (« promotion » en anglais) dans la terminologie PRIME.

Dans un mode de réalisation particulier, lorsqu'un dispositif noeud prend le rôle de dispositif noeud relais et que ledit dispositif noeud avait précédemment indiqué au dispositif concentrateur 110 que ledit dispositif noeud admet la désactivation du mécanisme de surveillance, le dispositif concentrateur 110 inclut dans la requête de changement de rôle une information indiquant si ledit dispositif noeud doit ou pas désactiver localement le mécanisme de surveillance. En effet, si le réseau de communication 121 est de telle sorte que tous les dispositifs noeuds relais ont la capacité de désactiver localement le mécanisme de surveillance, il n'est pas nécessaire que le dispositif concentrateur 110 indique si le dispositif noeud relais doit ou pas désactiver localement le mécanisme de surveillance ; sinon, cela signifie que des dispositifs noeuds admettant la désactivation du mécanisme de surveillance côtoient dans le réseau de communication 121 des dispositifs noeuds n'admettant pas la désactivation du mécanisme de surveillance, et il est nécessaire que le dispositif concentrateur 110 indique si le dispositif noeud relais doit ou pas désactiver localement le mécanisme de surveillance.

Dans un autre mode de réalisation particulier, comme déjà mentionné, le dispositif concentrateur 110 peut donner, dès l'enregistrement du dispositif noeud concerné, l'autorisation audit dispositif noeud concerné de désactiver localement le mécanisme de surveillance. Dans ce cas, il n'est pas nécessaire que le dispositif concentrateur 110 refournisse une telle indication à l'étape 604.

En tout état de cause, suite au changement de topologie, tous les dispositifs noeuds terminaux du réseau de communication 121 doivent avoir activé le mécanisme de surveillance.

La Fig. 7 illustre schématiquement un algorithme de configuration par un dispositif noeud relais, selon ledit mode de réalisation particulier de la Fig. 6. Considérons que l'algorithme de la Fig. 7 est mis en oeuvre par le dispositif noeud 133, après changement de topologie menant à la topologie de la Fig. 1A. On considère alors que le dispositif noeud terminal 137 s'est enregistré dans le réseau de communication 121 par le biais du dispositif noeud 133, qui était jusqu'alors un dispositif noeud terminal.

Dans une étape 701, le dispositif noeud relais 133 reçoit une requête de changement de rôle, telle que transmise par le dispositif concentrateur 110 à l'étape 604.

Dans une étape 702 suivante, le dispositif noeud 133 détermine, d'après le contenu de la requête reçue à l'étape 701, si le dispositif concentrateur 110 requiert que le dispositif noeud 133 prenne le rôle de dispositif noeud relais. Si tel est le cas, une étape 703 est effectuée ; sinon, le dispositif noeud concerné est un dispositif noeud terminal (cas d'un dispositif noeud relais duquel on déconnecterait l'unique dispositif noeud terminal rattaché), puis une étape 706 est effectuée. Pour ce qui concerne le schéma de la Fig. 1A, le dispositif concentrateur 110 requiert en effet que le dispositif noeud 133 prenne le rôle de dispositif noeud relais.

Dans l'étape 703, le dispositif noeud 133 obtient, d'après le contenu de la requête reçue à l'étape 701, une information indiquant si le dispositif noeud 133 doit ou pas activer localement le mécanisme de surveillance. Dans le cas du dispositif noeud 133, cela dépend du fait que le dispositif noeud relais 130 (situé entre le dispositif concentrateur 110 et le dispositif noeud 133) admet ou pas la désactivation du mécanisme de surveillance (si l'on considère que le dispositif noeud 133 admet la désactivation du mécanisme de surveillance).

Dans un mode de réalisation particulier, comme déjà mentionné, le dispositif concentrateur 110 peut donner, dès l'enregistrement du dispositif noeud 133, l'autorisation audit dispositif noeud 133 de désactiver localement le mécanisme de surveillance. Dans ce cas, il n'est pas nécessaire que le dispositif concentrateur 110 refournisse une telle indication à l'étape 604, et donc, à l'étape 703, le dispositif noeud 133 utilise l'indication qui avait été donnée par le dispositif concentrateur 110 à l'enregistrement du dispositif noeud 133.

Dans une étape 704 suivante, le dispositif noeud 133 vérifie si l'information obtenue à l'étape 703 indique que le dispositif noeud 133 doit activer localement le mécanisme de surveillance. Si tel est le cas, l'étape 706 est effectuée ; sinon, une étape 705 est effectuée.

Dans l'étape 705, le dispositif noeud concerné désactive (ou maintient désactivé) localement le mécanisme de surveillance, puis met fin à l'algorithme. C'est le cas du dispositif noeud 133, si le dispositif noeud relais 130 admet la désactivation du mécanisme de surveillance.

Dans l'étape 706, le dispositif noeud concerné active localement le mécanisme de surveillance, puis met fin à l'algorithme. C'est le cas du dispositif noeud 133, si le dispositif noeud relais 130 n'admet pas la désactivation du mécanisme de surveillance. En effet, le dispositif noeud relais 130 s'appuierait sur les transmissions de requêtes de vérification de présence et de leurs réponses pour mettre à jour des tables de routage.

L'algorithme de la Fig. 7 a été décrit en supposant qu'un dispositif noeud relais désactive localement le mécanisme de surveillance sur réception d'une requête de changement de rôle (promotion en tant que dispositif noeud relais). Dans les spécifications PRIME, cela correspond à une réception de confirmation de promotion PRO_REQ_B. Cependant, cela pourrait aussi correspondre à une réception de configuration d'émission de balises BSI_IND ou à une réception de confirmation d'enregistrement REG_RSP d'un dispositif noeud terminal qui a cherché à se rattacher directement audit dispositif noeud, avec le même effet.

La Fig. 8 illustre schématiquement un algorithme de traitement, au sein d'un dispositif noeud relais ayant désactivé localement le mécanisme de surveillance, de requêtes d'enregistrement dans le réseau de communication 121. Considérons que l'algorithme de la Fig. 8 est mis en oeuvre par le dispositif noeud relais 133.

Dans une étape 801, le dispositif noeud relais 133 reçoit une requête d'enregistrement en provenance d'un nouveau dispositif noeud désireux de se connecter au réseau de communication 121.

Dans une étape 802 suivante, le dispositif noeud relais 133 obtient, d'après le contenu de la requête d'enregistrement, une information indiquant si le nouveau dispositif noeud admet la désactivation du mécanisme de surveillance. Cela permet au dispositif noeud relais 133 de savoir, dans le cas où le nouveau dispositif noeud prendrait ultérieurement le rôle de dispositif noeud relais, si des transactions dans le cadre du mécanisme de surveillance sont à attendre entre le dispositif concentrateur 110 et le nouveau dispositif noeud.

Dans une étape 803 suivante, le dispositif noeud relais 133 détermine si la requête d'enregistrement reçue à l'étape 801 a été transmise par un dispositif noeud indiqué comme dispositif noeud relais dans une table de routage du dispositif noeud relais 133. La réception d'une telle requête d'enregistrement signifierait que le nouveau dispositif noeud est un dispositif noeud relais qui s'est retrouvé déconnecté. La déconnection de ce dispositif noeud relais, ainsi que de tout dispositif noeud qui lui est directement ou indirectement rattaché, doit alors être reflétée dans la table de routage du dispositif noeud relais 133. C'est ce que fait le dispositif noeud relais dans une étape 804 ; puis, le dispositif noeud relais 133 se remet en attente d'une réception de requête d'enregistrement en provenance d'un nouvel autre dispositif noeud dans l'étape 801.

Si la requête d'enregistrement reçue à l'étape 801 a été transmise par un dispositif noeud qui n'est pas indiqué comme dispositif noeud relais dans la table de routage du dispositif noeud relais 133, alors une étape 805 est effectuée dans laquelle le dispositif noeud 133 détermine combien de telles requêtes d'enregistrement non-acquittées le dispositif noeud 133 a reçu en provenance du même dispositif noeud dans une fenêtre temporelle prédéfinie, *i. e.* requêtes d'enregistrement sans qu'aucune réponse (acceptation ou refus d'enregistrement) en provenance du dispositif concentrateur 110 ne soit détecté par ledit dispositif noeud 133. Si la quantité *N* de ces requêtes d'enregistrement non-acquittées est supérieure ou égale à un seuil *Th,* une étape 806 est effectuée ; sinon, le dispositif noeud relais 133 se remet en attente d'une réception de requête d'enregistrement en provenance d'un nouvel autre dispositif noeud dans l'étape 801.

Dans l'étape 806, le dispositif noeud 133 déduit que ledit dispositif noeud 133 a été déconnecté du réseau de communication 121. Par exemple, le dispositif noeud relais 130 a été déconnecté du réseau de communication 121, ce qui a entraîné la déconnexion de tous les dispositifs noeud qui lui sont directement ou indirectement rattachés. Le dispositif noeud 133 tente d'effectuer un réenregistrement dans le réseau de communication 121. Après réenregistrement, le dispositif noeud 133 reprend le rôle de dispositif noeud terminal.

La Fig. 9 illustre schématiquement un algorithme, mis en oeuvre par un dispositif noeud relais ayant désactivé localement le mécanisme de surveillance, de traitement de requêtes de vérification de présence d'un dispositif noeud rattaché au dispositif noeud relais. Considérons que l'algorithme de la Fig. 9 est mis en oeuvre par le dispositif noeud relais 133.

Dans une étape 901, le dispositif noeud relais 133 reçoit une requête de vérification de présence en provenance du dispositif concentrateur 110 et à destination d'un dispositif noeud rattaché directement ou indirectement au dispositif noeud relais 133. Il convient de noter que, puisque le dispositif noeud relais 133 a désactivé localement le mécanisme de surveillance, le dispositif concentrateur 110 n'est pas censé adresser de requête de vérification de présence au dispositif noeud relais 133. Si toutefois le dispositif concentrateur 110 venait à le faire, il est souhaitable que le dispositif noeud relais 133 réponde à cette requête, afin de confirmer sa présence au sein du réseau de communication 121 et ainsi éviter d'être déconnecté (ainsi que tous les dispositifs noeuds qui lui sont directement ou indirectement rattachés) du réseau de communication 121.

Dans une étape 902 suivante, le dispositif noeud relais 133 détermine si le dispositif noeud auquel la requête de vérification de présence était adressée y a répondu. Si tel est le cas, une étape 903 est effectuée ; sinon, une étape 904 est effectuée.

Dans l'étape 903, le dispositif réinitialise une temporisation associée au dispositif noeud auquel la requête de vérification de présence était adressée. En effet, chaque dispositif noeud relais doit surveiller la présence effective des dispositifs noeuds qui lui sont directement et indirectement rattachés. C'est pourquoi il n'est pas possible de désactiver le mécanisme de surveillance d'un dispositif noeud relais quand un dispositif noeud relais n'admettant pas la désactivation du mécanisme de surveillance se trouve sur le chemin entre ledit dispositif noeud relais et le dispositif concentrateur 110. Le dispositif noeud relais 133 surveille la présence effective des dispositifs noeuds qui lui sont directement et indirectement rattachés en surveillant les transactions entre les dispositifs noeuds terminaux (ainsi que les dispositifs noeuds relais n'admettant pas la désactivation du mécanisme de surveillance) et le dispositif concentrateur 110. Le dispositif noeud relais 133 gère une temporisation, pour chaque dispositif noeud terminal (ainsi que chaque dispositif noeud relais n'admettant pas la désactivation du mécanisme de surveillance) qui lui est rattaché, comme le fait le dispositif concentrateur 110. Si la temporisation expire sans que le dispositif noeud terminal n'ait répondu à une requête de vérification de présence, le dispositif noeud relais 133 considère que le dispositif noeud terminal est déconnecté et met à jour la table de routage en conséquence. Grâce à ces temporisations, le dispositif noeud relais 133 peut en outre détecter qu'aucune requête de vérification de présence n'est reçue par au moins un dispositif noeud terminal (ou au moins un dispositif noeud relais n'admettant pas la désactivation du mécanisme de surveillance) en provenance du dispositif concentrateur 110 avant expiration de la temporisation. Dans ce cas, le dispositif noeud 133 déduit que ledit dispositif noeud 133 a été déconnecté du réseau de communication 121. Le dispositif noeud 133 tente alors d'effectuer un réenregistrement dans le réseau de communication 121. Après réenregistrement, le dispositif noeud 133 reprend le rôle de dispositif noeud terminal.

Suite à l'étape 903, le dispositif noeud relais 133 se remet en attente d'une réception de requête de vérification de présence en provenance du dispositif concentrateur 110 dans l'étape 901.

Dans l'étape 904, le dispositif noeud relais 133 effectue une mise à jour de sa table de routage pour refléter la déconnexion du dispositif noeud n'ayant pas répondu à la requête de vérification de présence qui lui était adressée. Si ce dispositif noeud était un dispositif noeud relais, le dispositif noeud relais 133 supprime de sa table de routage ce dispositif noeud relais ainsi que tout dispositif noeud qui lui était directement ou indirectement rattaché. Si, par contre, ce dispositif noeud était un dispositif noeud terminal, le dispositif noeud relais 133 vérifie dans une étape 905 si cela induit un dispositif noeud relais isolé, c'est-à-dire se retrouvant sans dispositif noeud rattaché. Si ce dispositif noeud relais reste isolé pendant une période de temps supérieure à un seuil prédéfini, une étape 906 est effectuée ; sinon, le dispositif noeud relais 133 se remet en attente d'une réception de requête de vérification de présence en provenance du dispositif concentrateur 110 dans l'étape 901.

Dans l'étape 906, le dispositif noeud 133 met à jour la table de routage pour refléter que le dispositif noeud relais isolé a été déconnecté du réseau de communication 121. Puis, le dispositif noeud relais 133 se remet en attente d'une réception de requête de vérification de présence en provenance du dispositif concentrateur 110 dans l'étape 901.

La Fig. 10 illustre schématiquement un algorithme, mis en oeuvre par le dispositif concentrateur 110, de vérification de présence de dispositifs noeuds dans le réseau de communication 121, dans le cadre du mécanisme de surveillance.

Dans une étape 1001, le dispositif concentrateur 110 est en attente d'un événement déclencheur de vérification de présence d'un dispositif noeud du réseau de communication 121. Le dispositif concentrateur va 110 donc en effet vérifier si sa compréhension de la topologie du réseau de communication 121 est fidèle à la réalité, notamment parce que les phénomènes de diaphonie peuvent fréquemment nuire à la stabilité du réseau de communication 121. Un tel événement déclencheur est par exemple que le dispositif concentrateur 110 a détecté que le temps restant avant expiration de la temporisation associée audit dispositif noeud est inférieur à un seuil prédéfini.

Dans une étape 1002 suivante, le dispositif concentrateur 110 envoie une requête de vérification de présence à destination dudit dispositif noeud. Ce dispositif noeud est un dispositif noeud terminal ou un dispositif noeud relais n'admettant pas la désactivation du mécanisme de surveillance.

Dans une étape 1003 suivante, le dispositif concentrateur 110 détermine si le dispositif noeud auquel la requête de vérification de présence était adressée y a répondu. Si tel est le cas, le dispositif concentrateur 110 se remet en attente d'un événement déclencheur dans l'étape 1001 ; sinon, une étape 1004 est effectuée.

Dans l'étape 1004, le dispositif concentrateur 110 effectue une mise à jour de sa vision de la topologie du réseau de communication 121 et effectue les reconfigurations nécessaires auprès des dispositifs noeuds concernés (changement de rôle,...).

Dans une étape 1005 suivante, le dispositif concentrateur 110 vérifie si l'absence de réponse détectée à l'étape 1003 implique qu'un dispositif noeud relais s'est retrouvé isolé ou a été déconnecté. En effet, si aucun dispositif noeud terminal (ainsi qu'aucun dispositif noeud relais n'admettant pas la désactivation du mécanisme de surveillance) ne répond aux requêtes de vérification de présence, cela signifie que le dispositif noeud relais se retrouve isolé ou a été déconnecté. Si le dispositif concentrateur 110 considère qu'aucun dispositif noeud relais n'est *a priori* isolé ni déconnecté, le dispositif concentrateur 110 se remet en attente d'un événement déclencheur dans l'étape 1001 ; sinon, une étape 1006 est effectuée.

Dans l'étape 1006, le dispositif concentrateur 110 surveille une éventuelle activité dudit dispositif noeud relais pendant une période de temps prédéfinie.

Dans une étape 1007 suivante, le dispositif concentrateur 110 vérifie si une activité dudit dispositif noeud relais a été détectée pendant ladite période de temps prédéfinie. Si tel est le cas, le dispositif concentrateur 110 se remet en attente d'un événement déclencheur dans l'étape 1001 ; sinon, une étape 1008 est effectuée.

Dans l'étape 1008, le dispositif concentrateur 110 envoie une requête de vérification de présence audit dispositif noeud relais.

Dans une étape 1009 suivante, le dispositif concentrateur 110 détermine si le dispositif noeud relais auquel la requête de vérification de présence était adressée y a répondu. Si tel est le cas, une étape 1010 est effectuée ; sinon, une étape 1004 est effectuée.

Dans l'étape 1010, le dispositif concentrateur 110 comprend que ledit dispositif noeud relais est toujours présent dans le réseau de communication 121. Le dispositif concentrateur 110 met à jour sa vision de la topologie du réseau de communication 121 en conséquence et envoie audit dispositif noeud relais une requête de changement de rôle indiquant de se reconfigurer en tant que dispositif noeud terminal. Puis, le dispositif concentrateur 110 se remet en attente d'un événement déclencheur dans l'étape 1001.

Dans l'étape 1011, le dispositif concentrateur 110 comprend que ledit dispositif noeud relais a été déconnecté du réseau de communication 121. Le dispositif concentrateur 110 met à jour sa vision de la topologie du réseau de communication 121 en conséquence. Le dispositif concentrateur 110 peut alors vérifier si ledit dispositif noeud relais n'était pas connecté à un autre dispositif noeud relais qui se serait retrouvé isolé. Le dispositif concentrateur 110 pourrait alors réitérer les étapes de l'algorithme de la Fig. 10 à compter de l'étape 1006 pour cet autre dispositif noeud relais. Puis, le dispositif concentrateur 110 se remet en attente d'un événement déclencheur dans l'étape 1001.

Certains modes de réalisation décrits ci-dessus nécessite de donner une fonction à des bits indiqués comme réservés dans des messages des spécifications PRIME. Cela peut entraîner que certains compteurs électriques refusent de prendre en compte le message même si son intégrité est vérifiée par CRC (« Cyclic Redundancy Checksum » en anglais). Afin de pallier ce problème, un compteur électrique admettant la désactivation du mécanisme de surveillance peut émettre *N1* fois sa requête d'enregistrement en annonçant sa capacité. Si le compteur électrique n'obtient pas de réponse après ces *N1* essais, alors le compteur électrique peut considérer qu'un compteur électrique entre le dispositif concentrateur et ledit compteur électrique refuse de prendre en compte le message, ou bien que le dispositif concentrateur refuse de prendre en compte ce message. Le compteur électrique émet alors les prochaines requêtes d'enregistrement en n'annonçant pas sa capacité à supporter la désactivation du mécanisme de surveillance.

## Revendications

1. Procédé de suivi et de maintien de topologie d'un réseau de communication (121) sous forme d'arbre de dispositifs noeuds et dans lequel des collisions de messages peuvent survenir, des dispositifs noeuds pouvant être relais (130 ; 131 ; 133 ; 135) entre un dispositif concentrateur (110) qui est racine de l'arbre et d'autres dispositifs noeuds (134 ; 136 ; 137 ; 138 ; 139) qui leur sont respectivement rattachés, les dispositifs noeuds qui ne sont pas relais étant des dispositifs noeuds terminaux, les dispositifs noeuds implémentant un mécanisme de surveillance dans lequel le dispositif concentrateur envoie auxdits dispositifs noeuds des requêtes de vérification de présence auxquelles lesdits dispositifs noeuds doivent répondre avant expiration d'une temporisation prédéterminée afin de notifier de leur présence dans le réseau de communication sous peine d'être considérés comme déconnectés du réseau de communication,
**caractérisé en ce que** le mécanisme de surveillance est désactivé (306) pour certains au moins des dispositifs noeuds relais, et est activé (305) pour les autres dispositifs noeuds du réseau de communication,
et **en ce que**, lorsqu'au moins tous les dispositifs noeuds terminaux rattachés directement ou indirectement à un dispositif noeud relais sont considérés déconnectés par le mécanisme de surveillance, ledit noeud relais est considéré comme déconnecté du réseau de communication.

2. Procédé selon la revendication 1, **caractérisé en ce que**, lorsqu'un dispositif noeud relais détecte (805) une quantité de requêtes d'enregistrement non-acquittées en provenance d'au moins un dispositif noeud supérieure à un seuil prédéfini, ledit dispositif noeud relais considère être déconnecté du réseau de communication.

3. Procédé selon l'une quelconque des revendications 1 et 2, **caractérisé en ce que**, lorsqu'un dispositif noeud relais détecte qu'un dispositif noeud qui lui est rattaché ne répond pas à une requête de vérification de présence avant expiration de la temporisation prédéterminée, ledit dispositif noeud relais effectue les étapes suivantes :
- met à jour (904) une table de routage pour refléter une déconnexion dudit dispositif noeud ;
- détermine, lorsque ledit dispositif noeud était rattaché indirectement audit dispositif noeud relais via un autre dispositif noeud relais, si ledit autre dispositif noeud relais est déconnecté (905), et si tel est le cas, met à jour (906) la table de routage pour refléter une déconnexion dudit autre dispositif noeud relais et de tout dispositif noeud qui y était rattaché.

4. Procédé selon l'une quelconque des revendications 1 à 3, **caractérisé en ce que**, lorsqu'un dispositif noeud relais détecte qu'un dispositif noeud qui lui est rattaché ne répond pas à une requête de vérification de présence avant expiration de la temporisation prédéterminée, ledit dispositif noeud relais effectue les étapes suivantes :
- met à jour (904) une table de routage pour refléter une déconnexion dudit dispositif noeud ;
- détermine, lorsque ledit dispositif noeud était rattaché indirectement audit dispositif noeud relais via un autre dispositif noeud relais, si ledit autre dispositif noeud relais reste isolé (905) pendant une période de temps supérieure à un seuil prédéfini, et si tel est le cas, met à jour la table de routage (906) pour refléter une déconnexion dudit autre dispositif noeud relais et de tout dispositif noeud qui y était rattaché.

5. Procédé selon l'une quelconque des revendications 1 à 4, **caractérisé en ce que**, lorsque le dispositif concentrateur détecte qu'un dispositif noeud ne répond pas à une requête de vérification de présence avant expiration de la temporisation prédéterminée, ledit dispositif noeud relais effectue les étapes suivantes :
- met à jour (1004) la topologie dudit réseau de communication ;
- détermine, lorsque ledit dispositif noeud était rattaché indirectement audit dispositif concentrateur via un dispositif noeud relais, si ledit dispositif noeud relais est déconnecté, et si tel est le cas, met à jour (1010) la topologie dudit réseau de communication pour refléter une déconnexion dudit autre dispositif noeud relais et de tout dispositif noeud qui y était rattaché.

6. Procédé selon l'une quelconque des revendications 1 à 5, **caractérisé en ce que**, lorsque le dispositif concentrateur détecte qu'un dispositif noeud ne répond pas à une requête de vérification de présence avant expiration de la temporisation prédéterminée, ledit dispositif concentrateur effectue les étapes suivantes :
- met à jour (1004) la topologie dudit réseau de communication ;
- détermine, lorsque ledit dispositif noeud était rattaché indirectement audit dispositif concentrateur via un dispositif noeud relais, si ledit autre dispositif noeud relais est isolé et inactif pendant une période de temps supérieure à un seuil prédéfini, et si tel est le cas, met à jour (1010) la table de routage pour refléter une déconnexion dudit autre dispositif noeud relais et de tout dispositif noeud qui y était rattaché.

7. Procédé selon l'une quelconque des revendications 1 à 6, **caractérisé en ce que**, lorsqu'un dispositif noeud envoie (402) une requête d'enregistrement dans le réseau de communication, ledit dispositif noeud indique (500) dans ladite requête si ledit dispositif noeud admet de désactiver le mécanisme de surveillance.

8. Procédé selon la revendication 7, **caractérisé en ce que** le dispositif concentrateur effectue les étapes suivantes :
- obtient (603) de chaque requête d'enregistrement une information indiquant si ledit dispositif noeud admet ou pas de désactiver le mécanisme de surveillance ;
- détermine (602) des chemins entre chaque dispositif noeud relais et ledit dispositif concentrateur ; et
- envoie (604), uniquement à chaque dispositif noeud relais dont le chemin vers le dispositif concentrateur ne comporte pas de dispositif noeud relais n'admettant pas la désactivation du mécanisme de surveillance, un message indiquant de désactiver le mécanisme de surveillance.

9. Procédé selon l'une quelconque des revendications 1 à 8, **caractérisé en ce que** le réseau de communication est à courants porteurs en ligne et les dispositifs noeuds sont des compteurs électriques.

10. Procédé selon la revendication 9, **caractérisé en ce que** le réseau de communication est de type PRIME, le dispositif concentrateur acceptant la désactivation du mécanisme de surveillance.

11. Procédé selon la revendication 1, **caractérisé en ce que** ledit procédé est mis en oeuvre par ledit dispositif concentrateur.

12. Système de suivi et de maintien de topologie d'un réseau de communication (121) sous forme d'arbre de dispositifs noeuds et dans lequel des collisions de messages peuvent survenir, des dispositifs noeuds pouvant être relais (130 ; 131 ; 133 ; 135) entre un dispositif concentrateur (110) qui est racine de l'arbre et d'autres dispositifs noeuds (134 ; 136 ; 137 ; 138 ; 139) qui leur sont respectivement rattachés, les dispositifs noeuds qui ne sont pas relais étant des dispositifs noeud terminaux, les dispositifs noeuds implémentant un mécanisme de surveillance dans lequel le dispositif concentrateur envoie auxdits dispositifs noeuds des requêtes de vérification de présence auxquelles lesdits dispositifs noeuds doivent répondre avant expiration d'une temporisation prédéterminée afin de notifier de leur présence dans le réseau de communication sous peine d'être considérés comme déconnectés du réseau de communication,
**caractérisé en ce que** le mécanisme de surveillance est désactivé pour certains au moins des dispositifs noeuds relais, et est activé pour les autres dispositifs noeuds du réseau de communication,
et **en ce que**, lorsqu'au moins tous les dispositifs noeuds terminaux rattachés directement ou indirectement à un dispositif noeud relais sont considérés déconnectés par le mécanisme de surveillance, ledit noeud relais est considéré comme déconnecté du réseau de communication.

13. Système selon la revendication 12, **caractérisé en ce que** ledit système est implémenté par ledit dispositif concentrateur.

14. Programme d'ordinateur, **caractérisé en ce qu'**il comprend des instructions pour mettre en oeuvre, par un dispositif concentrateur, le procédé selon la revendication 11, lorsque ledit programme est exécuté par un processeur dudit dispositif concentrateur.

15. Moyens de stockage, **caractérisés en ce qu'**ils stockent un programme d'ordinateur comprenant des instructions pour mettre en oeuvre, par un dispositif concentrateur, le procédé selon la revendication 11, lorsque ledit programme est exécuté par un processeur dudit dispositif concentrateur.

## Patentansprüche

1. Verfahren zum Verfolgen und Aufrechterhalten der Topologie eines Kommunikationsnetzes (121) in Form eines Baums von Knotenvorrichtungen, in dem Nachrichtenkollisionen auftreten können, wobei die Knotenvorrichtungen Weiterleitungseinrichtungen (130; 131; 133; 135) zwischen einer Netzverteilungsvorrichtung (110), die die Wurzel des Baums ist, und anderen Knotenvorrichtungen (134; 136; 137; 138; 139), die daran jeweils angeschlossen sind, sein können, wobei die Knotenvorrichtungen, die keine Weiterleitungseinrichtungen sind, Abschlussknotenvorrichtungen sind, wobei die Knotenvorrichtungen einen Überwachungsmechanismus implementieren, in dem die Netzverteilungsvorrichtungen an die Knotenvorrichtungen Anforderungen zum Verifizieren der Anwesenheit schickt, auf die die Knotenvorrichtungen vor Ablauf einer vorgegebenen Zeitspanne antworten müssen, um ihre Anwesenheit in dem Kommunikationsnetz zu melden oder um andernfalls als von dem Kommunikationsnetz getrennt angesehen zu werden,
**dadurch gekennzeichnet, dass** der Überwachungsmechanismus wenigstens für Bestimmte der Weiterleitungseinrichtungsknotenvorrichtungen nicht aktiv (306) ist und für die anderen Knotenvorrichtungen des Kommunikationsnetzes aktiv (305) ist,
und dass dann, wenn wenigstens alle Abschlussknotenvorrichtungen, die direkt oder indirekt an eine Weiterleitungseinrichtungsknotenvorrichtung angeschlossen sind, von dem Überwachungsmechanismus als getrennt angesehen werden, der Weiterleitungseinrichtungsknoten als von dem Kommunikationsnetz getrennt angesehen wird.

2. Verfahren nach Anspruch 1, **dadurch gekennzeichnet, dass** dann, wenn eine Weiterleitungseinrichtungsknotenvorrichtung eine Menge von nicht quittierten Eintragungsanforderungen von wenigstens einer Knotenvorrichtung, die höher als ein im Voraus definierter Schwellenwert ist, detektiert (805), die Weiterleitungseinrichtungsknotenvorrichtung sich von dem Kommunikationsnetz getrennt ansieht.

3. Verfahren nach einem der Ansprüche 1 und 2, **dadurch gekennzeichnet, dass** dann, wenn eine Weiterleitungseinrichtungsknotenvorrichtung detektiert, dass eine Knotenvorrichtung, die an sie angeschlossen ist, auf eine Anforderung zum Verifizieren der Anwesenheit vor Ablauf der vorgegebenen Zeitspanne nicht antwortet, diese Weiterleitungseinrichtungsknotenvorrichtung die folgenden Schritte ausführt:
- Aktualisieren (904) einer Lenkungstabelle, um eine Trennung der Knotenvorrichtung widerzuspiegeln;
- Bestimmen, wenn die Knotenvorrichtung an die Weiterleitungseinrichtungsknotenvorrichtung über eine andere Weiterleitungseinrichtungsknotenvorrichtung indirekt angeschlossen war, ob die andere Weiterleitungseinrichtungsknotenvorrichtung getrennt worden ist (905), und wenn ja, Aktualisieren (906) der Lenkungstabelle, um eine Trennung der anderen Weiterleitungseinrichtungsknotenvorrichtung und jeglicher Knotenvorrichtung, die an sie angeschlossen war, widerzuspiegeln.

4. Verfahren nach einem der Ansprüche 1 bis 3, **dadurch gekennzeichnet, dass** dann, wenn eine Weiterleitungseinrichtungsknotenvorrichtung detektiert, dass eine Knotenvorrichtung, die an sie angeschlossen ist, auf eine Anforderung zum Verifizieren der Anwesenheit nicht vor Ablauf der vorgegebenen Zeitspanne antwortet, die Weiterleitungseinrichtungsknotenvorrichtung die folgenden Schritte ausführt:
- Aktualisieren (904) einer Lenkungstabelle, um eine Trennung der Knotenvorrichtung widerzuspiegeln; und
- Bestimmen, wenn die Knotenvorrichtung an die Weiterleitungseinrichtungsknotenvorrichtung über eine andere Weiterleitungseinrichtungsknotenvorrichtung indirekt angeschlossen war, ob die andere Weiterleitungseinrichtungsknotenvorrichtung während einer Zeitdauer, die größer als ein im Voraus definierter Schwellenwert ist, isoliert bleibt (905), und wenn ja, Aktualisieren der Lenkungstabelle (906), um eine Trennung der anderen Weiterleitungseinrichtungsknotenvorrichtung und jeglicher Vorrichtung, die an sie angeschlossen war, widerzuspiegeln.

5. Verfahren nach einem der Ansprüche 1 bis 4, **dadurch gekennzeichnet, dass** dann, wenn die Netzverteilungsvorrichtung detektiert, dass eine Knotenvorrichtung nicht auf eine Anforderung zum Verifizieren der Anwesenheit vor Ablauf der vorgegebenen Zeitspanne antwortet, die Weiterleitungseinrichtungsknotenvorrichtung die folgenden Schritte ausführt:
- Aktualisieren (1004) der Topologie des Kommunikationsnetzes;
- Bestimmen, wenn die Knotenvorrichtung an die Netzverteilungsvorrichtung über eine Weiterleitungseinrichtungsknotenvorrichtung indirekt angeschlossen war, ob die Weiterleitungseinrichtungsknotenvorrichtung getrennt ist, und wenn ja, Aktualisieren (1010) der Topologie des Kommunikationsnetzes, um eine Trennung der anderen Weiterleitungseinrichtungsknotenvorrichtung und jeglicher Knotenvorrichtung, die daran angeschlossen war, widerzuspiegeln.

6. Verfahren nach einem der Ansprüche 1 bis 5, **dadurch gekennzeichnet, dass** dann, wenn die Netzverteilungsvorrichtung detektiert, dass eine Knotenvorrichtung auf eine Anforderung zum Verifizieren der Anwesenheit nicht vor Ablauf der vorgegebenen Zeitspanne antwortet, die Netzverteilungsvorrichtung die folgenden Schritte ausführt:
- Aktualisieren (1004) der Topologie des Kommunikationsnetzes;
- Bestimmen, wenn die Knotenvorrichtung an die Netzverteilungsvorrichtung über eine Weiterleitungseinrichtungsknotenvorrichtung indirekt angeschlossen war, ob die andere Weiterleitungseinrichtungsknotenvorrichtung während einer Zeitdauer, die größer als ein im Voraus definierter Schwellenwert ist, isoliert ist und inaktiv ist, und wenn ja, Aktualisieren (1010) der Lenkungstabelle, um eine Trennung der anderen Weiterleitungseinrichtungsknotenvorrichtung und jeglicher Knotenvorrichtung, die daran angeschlossen war, widerzuspiegeln.

7. Verfahren nach einem der Ansprüche 1 bis 6, **dadurch gekennzeichnet, dass** dann, wenn eine Knotenvorrichtung eine Anforderung zum Eintragen in das Kommunikationsnetz schickt (402), die Knotenvorrichtung in der Anforderung angibt (500), ob die Knotenvorrichtung zulässt, den Überwachungsmechanismus zu deaktivieren.

8. Verfahren nach Anspruch 7, **dadurch gekennzeichnet, dass** die Netzverteilungsvorrichtung die folgenden Schritte ausführt:
- Erhalten (603) von jeder Eintragungsanforderung einer Information, die angibt, ob die Knotenvorrichtung zulässt oder nicht zulässt, den Überwachungsmechanismus zu deaktivieren;
- Bestimmen (602) der Wege zwischen jeder Weiterleitungseinrichtungsknotenvorrichtung und der Netzverteilungsvorrichtung; und
- Schicken (604) ausschließlich an die Weiterleitungseinrichtungsknotenvorrichtung, deren Weg zu der Netzverteilungsvorrichtung keine Knotenvorrichtung enthält, die die Deaktivierung des Überwachungsmechanismus nicht zulässt, einer Nachricht, die angibt, den Überwachungsmechanismus zu deaktivieren.

9. Verfahren nach einem der Ansprüche 1 bis 8, **dadurch gekennzeichnet, dass** das Kommunikationsnetz ein Stromleitungsträgernetz ist und die Knotenvorrichtungen Stromzähler sind.

10. Verfahren nach Anspruch 9, **dadurch gekennzeichnet, dass** das Kommunikationsnetz vom Typ PRIME ist, wobei die Netzverteilungsvorrichtung die Deaktivierung des Überwachungsmechanismus akzeptiert.

11. Verfahren nach Anspruch 1, **dadurch gekennzeichnet, dass** das Verfahren von der Netzverteilungsvorrichtung ausgeführt wird.

12. System zum Verfolgen und Aufrechterhalten der Topologie eines Kommunikationsnetzes (121) in Form eines Baums von Knotenvorrichtungen, in dem Nachrichtenkollisionen auftreten können, wobei die Knotenvorrichtungen Weiterleitungseinrichtungen (130; 131; 133; 135) zwischen einer Netzverteilungsvorrichtung (110), die die Wurzel des Baums ist, und anderen Knotenvorrichtungen (134; 136; 137; 138; 139), die jeweils an sie angeschlossen sind, sein können, wobei die Knotenvorrichtungen, die keine Weiterleitungseinrichtungen sind, Abschlussknotenvorrichtungen sind, wobei die Knotenvorrichtungen einen Überwachungsmechanismus implementieren, in dem die Netzverteilungsvorrichtung an die Knotenvorrichtungen Anforderungen zum Verifizieren der Anwesenheit schickt, auf die die Knotenvorrichtungen vor Ablauf einer vorgegebenen Zeitspanne antworten müssen, um ihre Anwesenheit in dem Kommunikationsnetz zu melden oder um andernfalls als von dem Kommunikationsnetz getrennt angesehen zu werden,
**dadurch gekennzeichnet, dass** der Überwachungsmechanismus wenigstens für Bestimmte der Weiterleitungseinrichtungsknotenvorrichtungen nicht aktiv ist und für die anderen Knotenvorrichtungen des Kommunikationsnetzes aktiv ist,
und dass dann, wenn wenigstens alle Abschlussknotenvorrichtungen, die direkt oder indirekt an eine Weiterleitungseinrichtungsknotenvorrichtung angeschlossen sind, durch den Überwachungsmechanismus als getrennt angesehen werden, der Weiterleitungseinrichtungsknoten als von dem Kommunikationsnetz getrennt angesehen wird.

13. System nach Anspruch 12, **dadurch gekennzeichnet, dass** das System durch die Netzverteilungsvorrichtung implementiert ist.

14. Computerprogramm, **dadurch gekennzeichnet, dass** es Befehle enthält, um durch eine Netzverteilungsvorrichtung das Verfahren nach Anspruch 11 auszuführen, wenn das Programm von einem Prozessor der Netzverteilungsvorrichtung abgearbeitet wird.

15. Speichermittel, **dadurch gekennzeichnet, dass** sie ein Computerprogramm speichern, das Anweisungen enthält, um durch eine Netzverteilungsvorrichtung das Verfahren nach Anspruch 11 auszuführen, wenn das Programm von einem Prozessor der Netzverteilungsvorrichtung abgearbeitet wird.

## Claims

1. Method for tracking and maintaining the topology of a communication network (121) in the form of a tree-structure of node devices and in which message collisions can occur, node devices being able to be relays (130; 131; 133; 135) between a concentrator device (110) which is the root of the tree and other node devices (134; 136; 137; 138; 139) which are respectively attached to them, the node devices which are not relays being terminal node devices, the node devices implementing a monitoring mechanism in which the concentrator device sends to said node devices presence checking requests to which said node devices must respond before the expiry of a predetermined time delay in order to notify of their presence in the communication network, or else be considered to be disconnected from the communication network,
**characterized in that** the monitoring mechanism is deactivated (306) for at least some of the relay node devices, and is activated (305) for the other node devices of the communication network,
and **in that**, when at least all the terminal node devices attached directly or indirectly to a relay node device are considered disconnected by the monitoring mechanism, said relay node is considered to be disconnected from the communication network.

2. Method according to Claim 1, **characterized in that**, when a relay node device detects (805) a quantity of unacknowledged registration requests originating from at least one node device above a predefined threshold, said relay node device considers being disconnected from the communication network.

3. Method according to either one of Claims 1 and 2, **characterized in that**, when a relay node device detects that a node device which is attached to it does not respond to a presence checking request before the expiry of the predetermined time delay, said relay node device carries out the following steps:
- updates (904) a routing table to reflect a disconnection of said node device;
- determines, when said node device was attached indirectly to said relay node device via another relay node device, whether said other relay node device is disconnected (905), and if such is the case, updates (906) the routing table to reflect a disconnection of said other relay node device and of any node device which was attached thereto.

4. Method according to any one of Claims 1 to 3, **characterized in that**, when a relay node device detects that a node device which is attached to it does not respond to a presence checking request before the expiry of the predetermined time delay, said relay node device carries out the following steps:
- updates (904) a routing table to reflect a disconnection of said node device;
- determines, when said node device was attached indirectly to said relay node device via another relay node device, whether said other relay node device remains isolated (905) for a time period above a predefined threshold, and if such is the case, updates the routing table (906) to reflect a disconnection of said other relay node device and of any node device which was attached thereto.

5. Method according to any one of Claims 1 to 4, **characterized in that**, when the concentrator device detects that a node device does not respond to a presence checking request before the expiry of the predetermined time delay, said relay node device carries out the following steps:
- updates (1004) the topology of said communication network;
- determines, when said node device was attached indirectly to said concentrator device a relay node device, whether said relay node device is disconnected, and if such is the case, updates (1010) the topology of said communication network to reflect a disconnection of said other relay node device and of any node device which was attached thereto.

6. Method according to any one of Claims 1 to 5, **characterized in that**, when the concentrator device detects that a node device does not respond to a presence checking request before the expiry of the predetermined time delay, said concentrator device carries out the following steps:
- updates (1004) the topology of said communication network;
- determines, when said node device was attached indirectly to said concentrator device via a relay node device, whether said other relay node device is isolated and inactive for a time period above a predefined threshold, and if such is the case, updates (1010) the routing table to reflect a disconnection of said other relay node device and of any node device which was attached thereto.

7. Method according to any one of Claims 1 to 6, **characterized in that**, when a node device sends (402) a registration request in the communication network, said node device indicates (500) in said request whether said node device accepts deactivating the monitoring mechanism.

8. Method according to Claim 7, **characterized in that** the concentrator device carries out the following steps:
- obtains (603) from each registration request an information item indicating whether said node device accepts or does not accept deactivating the monitoring mechanism;
- determines (602) paths between each relay node device and said concentrator device; and
- sends (604), only to each relay node device whose path to the concentrator device does not include any relay node device not accepting the deactivation of the monitoring mechanism, a message indicating deactivating the monitoring mechanism.

9. Method according to any one of Claims 1 to 8, **characterized in that** the communication network is a powerline network and the node devices are electric meters.

10. Method according to Claim 9, **characterized in that** the communication network is of PRIME type, the concentrator device accepting the deactivation of the monitoring mechanism.

11. Method according to Claim 1, **characterized in that** said method is implemented by said concentrator device.

12. System for tracking and maintaining the topology of a communication network (121) in the form of a tree-structure of node devices and in which message collisions can occur, node devices being able to be relays (130; 131; 133; 135) between a concentrator device (110) which is the root of the tree and other node devices (134; 136; 137; 138; 139) which are respectively attached to them, the node devices which are not relays being terminal node devices, the node devices implementing a monitoring mechanism in which the concentrator device sends to said node devices presence checking requests to which said node devices must respond before the expiry of a predetermined time delay in order to notify of their presence in the communication network, or else be considered to be disconnected from the communication network,
**characterized in that** the monitoring mechanism is deactivated for at least some of the relay node devices, and is activated for the other node devices of the communication network,
and **in that**, when at least all the terminal node devices attached directly or indirectly to a relay node device are considered disconnected by the monitoring mechanism, said relay node is considered to be disconnected from the communication network.

13. System according to Claim 12, **characterized in that** said system is implemented by said concentrator device.

14. Computer program, **characterized in that** it comprises instructions for the implementation, by a concentrator device, of the method according to Claim 11, when said program is executed by a processor of said concentrator device.

15. Storage means, **characterized in that** they store a computer program comprising instructions for the implementation, by a concentrator device, of the method according to Claim 11, when said program is executed by a processor of said concentrator device.
